# EUROPEAN PATENT APPLICATION

(11) **EP 2 437 367 A2**
(43) Date of publication of application: **04.04.2012**
(21) Application number: 11180161.9
(22) Date of filing: 06.09.2011
(51) Int. Cl.: H02J 1/14, H02J 7/34

(54) **Load coordinating power draw for limited ampacity circuits**

(30) Priority: 01.10.2010 US 896691
(71) Applicant: The Boeing Company, Chicago, IL 60606-2016 (US)
(72) Inventor: Larsen, Ty Aaby, Everett, WA Washington 98203 (US)
(74) Representative: Howson, Richard G.B.

(57) **Abstract**

Presented is a system and method for coordinating power usage of electrical devices on a power bus. In an embodiment, the system includes a power bus, a first electrical device that is able to intermittently draw power from the power bus, a second electrical device that is able to intermittently draws power from the power bus, and a means for sensing when the second electrical device is intermittently drawing power. When the second electrical device is intermittently drawing power, the first electrical device is inhibited from drawing power from the power bus.

## Description

### BACKGROUND

Embodiments of the subject matter described herein relate generally to systems and methods for reducing electrical system loads drawn concurrently by devices requiring intermittent power.

When designing an electrical system for powering multiple devices, a conservative approach is to design the electrical system to handle the sum of the expected maximum loads to be drawn by each device. That sum of the loads is used to determine the size and electrical capacity of the wires used to connect the devices to the power source and also is used to determine the circuit protection necessary to protect the circuit and connected devices.

The assumption for the conservative approach is that there may be cases where all of the loads may be turned on and need power simultaneously. However, in some cases, there may be devices that only require power intermittently. An electrical system designed to provide continuous power will therefore use larger, heavier gauge wires and will generally be more expensive than necessary. In systems where space and weight are important factors, such as aviation power systems, the heavier gauge wires and larger power sources are unnecessary weight that must be carried by the vehicle, causing the vehicle to use additional fuel to carry the extra weight and reducing space in the airframe that could be utilized by other systems.

Standard practice in the art is to assume something called "demand factor." Demand factor is prevalent in residential applications. The demand factor is an estimate of how many devices might be simultaneously operating at any one time. All residential cabling and protective features are derated by this amount, thereby being somewhat cheaper. However, if the demand factor is not properly calculated or if too many devices simultaneously attempt to draw power, then the circuit breaker or fuse will trip. Circuit breaker tripping is considered an accepted risk, principally because devices can be unplugged and redistributed to different outlets in a home if necessary.

However, for some systems, such as vehicle electrical systems, it is desirable to avoid circuit breaker tripping. While excessive power draw can cause circuit breakers to trip, it also has the potential to overheat the electrical wiring. Excessive power cycling also increases stress on systems and components, increasing failure rates and reducing the useful lifespan of the equipment.

### SUMMARY

Presented is a system and method for coordinating power among multiple devices on limited ampacity circuits. In an embodiment, a system includes a power bus, a first electrical device that is able to intermittently draw power from the power bus, a second electrical device that is able to intermittently draws power from the power bus, and a means for sensing when the second electrical device is intermittently drawing power. When the second electrical device is intermittently drawing power, the first electrical device is inhibited from drawing power from the power bus.

In an embodiment, a method includes the operations of connecting a number of intelligent loads to an electrical circuit, energizing the electrical circuit, and coordinating the drawing of power by the intelligent loads to prevent a circuit breaker from disconnecting the electrical circuit from the power source.

In an embodiment, an apparatus includes a switch for intermittently drawing power from a power bus, a load in communication with the switch, a sensor that detects the electrical state of the power bus, and a controller that is in communication with the switch and sensor, and controls the intermittent drawing of power from the power bus for powering the load based in part on the electrical state of the power bus.

The features, functions, and advantages discussed can be achieved independently in various embodiments of the present invention or may be combined in yet other embodiments further details of which can be seen with reference to the following description and drawings.

### BRIEF DESCRIPTION OF THE DRAWINGS

The accompanying figures depict various embodiments of the system and method for coordinating power drawing among multiple devices on limited ampacity circuits. A brief description of each figure is provided below. Elements with the same reference number in each figure indicated identical or functionally similar elements. Additionally, the left-most digit(s) of a reference number indicate the drawing in which the reference number first appears.
Fig. 1 is a diagram of a single line circuit for a simplified example system;
Fig. 2 is a diagram of a single line circuit for a self-coordinating power system in one embodiment of the system and method for coordinating power drawing among multiple devices on limited ampacity circuits;
Fig. 3 is a diagram of a self-coordinating power unit in one embodiment of the system and method for coordinating power drawing among multiple devices on limited ampacity circuits;
Figs. 4a and 4b are diagrams illustrating current and voltage for six solenoids operating concurrently in a simplified example system;
Figs. 5a and 5b are diagrams illustrating current and voltage for the six solenoids of Figures 4a and 4b using self-coordinating power units in one embodiment of the system and method for coordinating power drawing among multiple devices on limited ampacity circuits; and
Fig. 6 is a flowchart of a method of operation for circuitry associated with a device that requires power intermittently in one embodiment of the system and method for coordinating power drawing among multiple devices on limited ampacity circuits.

### DETAILED DESCRIPTION

The following detailed description is merely illustrative in nature and is not intended to limit the embodiments of the invention or the application and uses of such embodiments. Furthermore, there is no intention to be bound by any expressed or implied theory presented in the preceding technical field, background, brief summary or the following detailed description.

A conservative approach when designing an electrical system for powering multiple devices is to design the electrical system to handle the sum of the expected maximum loads drawn by each device. That sum determines the electrical capacity of the wires used to connect the devices to the power source and also determines the circuit protection necessary to protect the circuit and the other connected devices.

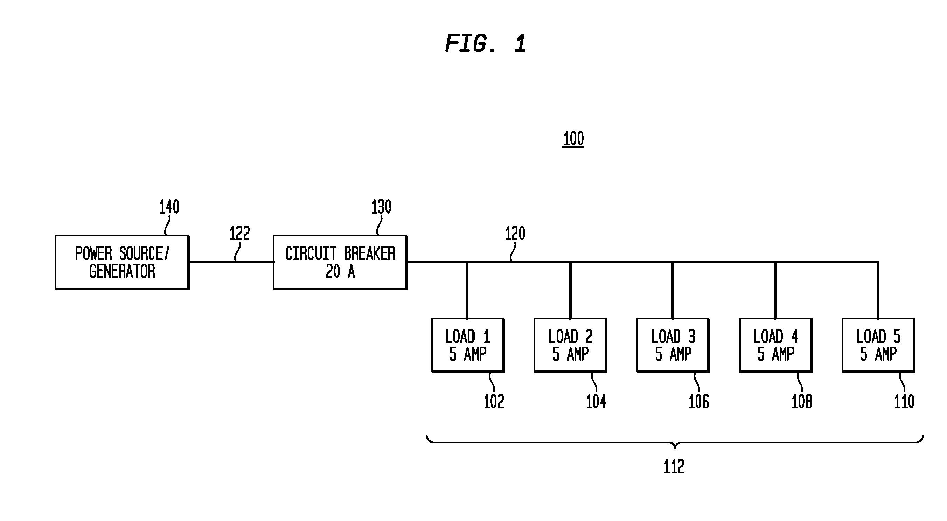

In Figure 1, an example diagram of a simplified system 100 is presented. In the simplified system 100, a series of loads 102, 104, 106, 108, 110 (collectively loads 112) each draw up to 5 Amps of current each when turned on. Each of the loads 112 is connected to a circuit breaker 130 through a common wire, or bus 120. The circuit breaker 130 is connected to the power source 140 through a power wire, alternatively known as a power feed 122. For the simplified system 100, a demand factor is estimated at 80%. A demand factor of 80% indicates that the simplified system 100 is designed so that no more than 80% of the maximum current draw for all of the loads 112 together is anticipated at any one time. The maximum possible current draw for the loads 112 together is 25 Amps (5 total loads, 102 104, 106, 108, 110, each drawing 5 Amps when turned on), assuming that all of the loads 112 draw current at the same time. The circuit breaker 130 will therefore trip if there is any load on the bus 120 that is greater than 20 Amps (25 Amps * 80% demand factor = 20 Amps). The bus 120 and protective features therefore only have to support a maximum of 20 Amps, however the bus 120 may be larger to reduce voltage drops along the length of the bus 120 due to the loads 112. The wire of the bus 120 is sized appropriately to handle 20 Amps.

The simplified system 100 has drawbacks however. If too many of the loads 112 draw power at the same time, the circuit breaker 130 will trip. If one of the loads 112 malfunctions but draws less than 20 Amps, then the circuit breaker 130 will not trip despite the fault condition. Also, when more than one load 112 is drawing power from the bus 120, different loads 112 may see different voltages based on voltage drops across the bus 120. For example, if loads 102, 104, and 106 are drawing current from the bus 120, then the voltage present at loads 108 and 110 may be reduced somewhat from the voltage provided by the power source 140.

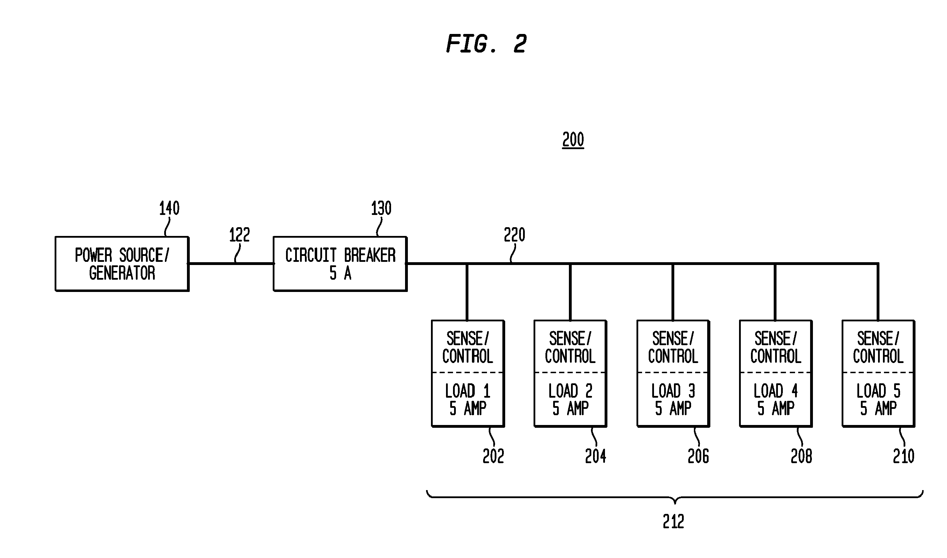

Referring now to Figure 2, a load coordinating system 200 is presented to address these and other issues. Similar to the simplified system 100 of Figure 1, the load coordinating system 200 has a power source 140 that provides power to a circuit breaker 130 through a power feed 122. The load coordinating system 200 advantageously uses a low power bus 220 that connects the circuit breaker 130 to the intelligent loads 202, 204, 206, 208, 210 (collectively intelligent loads 212.) The intelligent loads 212 coordinate with other intelligent loads 212 when drawing power from the low power bus 220.

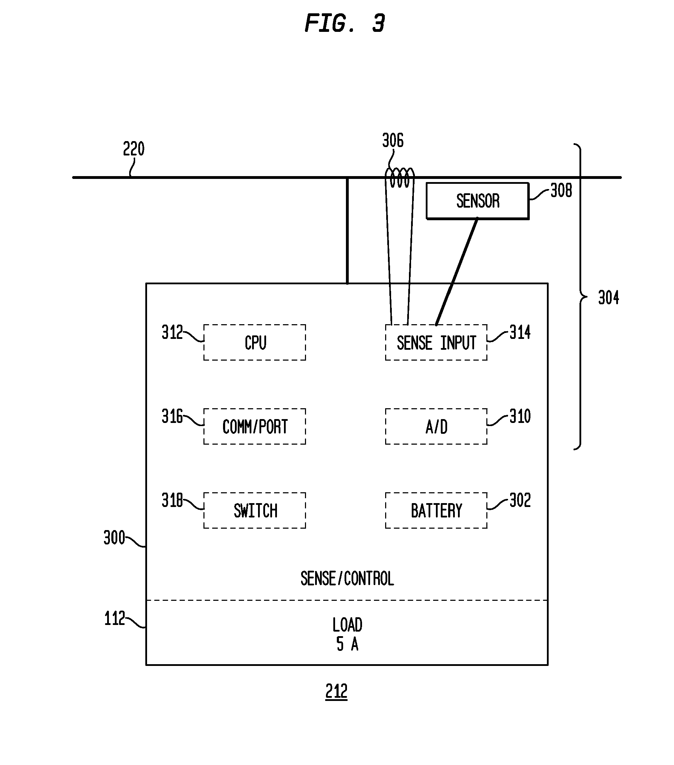

Referring now to Figures 2 and 3, in an embodiment, the intelligent load 212 comprises a load 112, and a sense/control 300. In an embodiment, the sense/control 300 has a switch 318 for interconnecting the load 112, the energy storage means 302, and the low power bus 220. In an embodiment, the sense/control 300 has an energy storage means 302. In an embodiment, one or more intelligent loads 212 share an energy storage means 302. In embodiments, the energy storage means 302 is a battery, such as a rechargeable Nickel-Cadmium (NiCad), Lithium-Ion (Li-Ion), or lithium polymer battery. In embodiments, the energy storage means 302 is a capacitive device. In embodiments, the energy storage means 302 stores sufficient energy to power an intelligent load 212 for one or more full activations. By providing power for one or more uses, the energy storage means 302 allows the intelligent load 212 to wait for extended periods of time to schedule power drawing from the low power bus 220 for recharging the energy storage means.

In embodiments, the energy storage means 302 provides power for operation of the sensing electronics 304 associated with an intelligent load 212. In these embodiments, the energy storage means 302 provides an initial source of power for the intelligent load 212 to enable sensing of the current state of the low power bus 220. This allows the intelligent load 212 to slow start when power is first presented on the low power bus 220. This prevents a common cause of nuisance trips, which occur when power is first presented on a bus 120. This condition occurs when multiple loads 112 immediately begin to draw power as soon as the bus 120 is energized after having been powered off for a period of time. By preventing the intelligent load 212 from immediately drawing power simultaneously when the low power bus 220 is first energized, one cause of nuisance trips is eliminated.

In an embodiment, the sense/control 300 has sensing electronics 304 that enables sensing of the current state of the low power bus 220. In an embodiment, one or more intelligent loads 212 share sensing electronics 304. In embodiments, the sensing electronics 304 comprises means for sensing the voltage, current, or power particulars of the low power pus. Non-limiting examples of means for sensing include a voltage sensor, an amperage sensor, a magnetic field sensor for example an inductive coil 306 for placement in proximity to, or around, the low power bus 220, an electric field sensor 308 such as a Hall effect device, a solid-state sensor, or any other electrical, magnetic, or electromagnetic sensor as would be understood in the art. In embodiments, the sensing electronics 304 directly senses the electrical condition of the low power bus 220, for example by monitoring the voltage on the low power bus 220 or the current passing through a portion of the low power bus 220. In embodiments, the sensing electronics 304 passively monitors the low power bus 220 using sensors 306, 308 that monitor capacitive or magnetic changes due to changes in electric or magnetic fields proximate to the low power bus 220. In an embodiment, the sensing electronics 304 includes associated circuitry to produce a signal indicating the current state of the low power bus 220. In a non-limiting example, the sensing electronics 304 comprises an analog to digital converter (A/D convertor 310), a processor or CPU 312 for controlling interactions between elements of the sense/control 300, and/or a communications port 316 for receiving a sense signal from an external device. In non-limiting embodiments, the CPU 312 is any kind of processor including, but not limited to, a DSP, an ARM processor, a programmable logic device, an ASIC, or any other processor as would be understood by one familiar in the art. In embodiments, the CPU 312 is electronics adapted to perform decisions based on inputs from the other components of the sense/control. The CPU 312 therefore is a controller that determines when the switch 318 interconnects the load 112, the energy storage means 302, and the low power bus 220. As inputs, the CPU can use programming, inputs from sensors 306, 308, inputs from other devices such as other intelligent loads 212, inputs from other components of the sense/control 300, or inputs received as communications signals from the communications port 316.

In an embodiment, the sense/control 300 and/or sensing electronics 304 are completely integrated into the intelligent load 212. In an embodiment, the sensing electronics 304 or sense/control 300 is an ASIC, hybrid chip, or other customizable chip, circuit or combination of chips and/or circuits for performing the sensing or sense/control functions. In an embodiment, the sensing electronics 304 is separate from the rest of the intelligent load 212. In this embodiment, and embodiments where the intelligent load 212 shares sensing electronics 304 with another intelligent load 212, the sensing electronics 304 includes a sense input 314 for connecting the sensing electronics 304 with the sensors 306, 308 or a sense output (not shown) of another intelligent load 212. In an embodiment, the intelligent load 212 further comprises a communications port or communication means 316 for exchanging signals with other intelligent loads 212. In non-limiting embodiments, the communications means 316 includes one or more data lines, a serial data communications port, a wireless data communications package, and a power line communications device for communicating over the low power bus 220.

In embodiments, before drawing power from the low power bus 220 each intelligent load 212 of the load coordinating system 200 uses the sensing electronics 304 to sense the current state of the low power bus 220. In embodiments, an intelligent load 212 coordinates with other intelligent loads 212 to schedule power draws from the low power bus 220. In embodiments, the intelligent loads 212 schedule power draws with the circuit breaker 130 or a computer system (not shown) that perform intelligent queuing or scheduling of power draws. In embodiments, both loads 112 and intelligent loads 212 are present on the same bus 120, 220. In embodiments, the intelligent loads 212 wait until power is not being drawn on the low power bus 220 before attempting to draw power. In embodiments, the intelligent loads 212 determine whether there is available capacity left on the low power bus 220 before drawing power, thereby allowing two or more intelligent loads 212 to simultaneously draw power without tripping the circuit breaker 130.

In an embodiment, if users try to activate a number of intelligent loads 212 simultaneously, the intelligent loads 212 detect whether or not to activate and draw current. In one embodiment, the intelligent loads 212 are prioritized, for example using dip switches, or any other means of establishing priority. The highest priority intelligent load 212 activates first. In another embodiment, the intelligent load 212 that is activated first draws power first. In either embodiment, the other intelligent loads 212 go into standby mode for a chosen length of time. The length of time can be static, for example 1 second before trying again, or can use a back-off method, such as increasing the amount of time between attempts in 500 msec increments. The length of time can also be adaptive or have a random variable, such a 500 msec +/- 200 msec before retesting the low power bus 220. In these embodiments, instead of the circuit breaker tripping as could occur in the simplified system 100 of Figure 1, some intelligent loads 122 will see a delay before activating. The faster each intelligent load 212 activates to draw current and then deactivates, the larger the number of intelligent loads 212 that can be installed together on a common low power bus 220 if the latency between activating is low. In an embodiment where the intelligent loads 212 communicate, an intelligent load 212 can signal another intelligent load 212 to deactivate allowing an override function. For example, if a load coordinating system 200 is first turned on, some intelligent loads 212 that have energy storage means 302 may start activating to charge the energy storage means 302. If a user attempts to activate another intelligent load 212 manually, that intelligent load 212 sends a signal to the other intelligent loads 212 to deactivate.

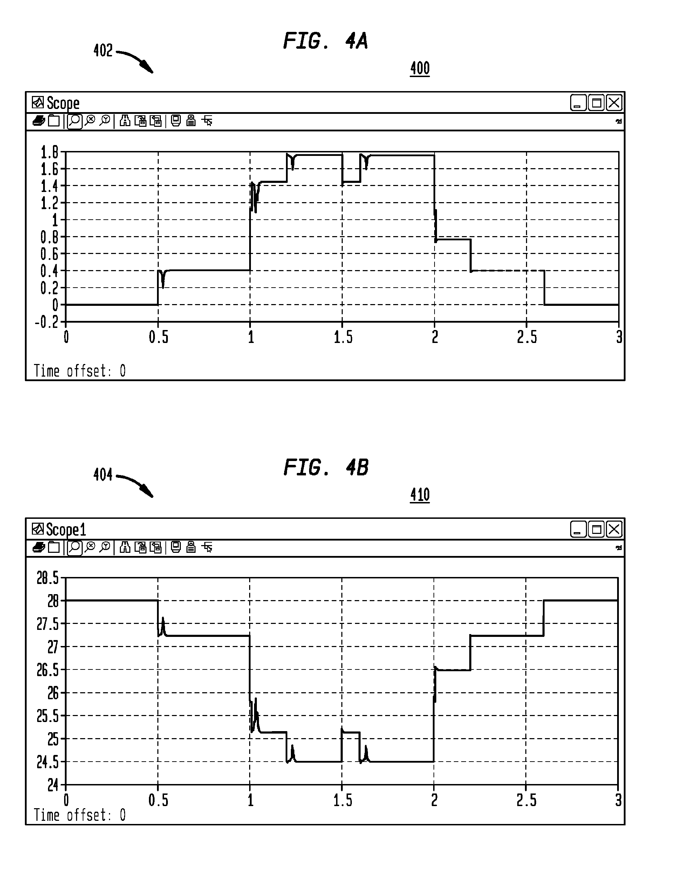

In embodiments, the intelligent loads 212 communicate with other intelligent loads 212, with a circuit breaker 130, with a power source 140, or with a computing system (not shown) to coordinate power draws. For example, an intelligent load 212 may communicate with a power source 140, such as a generator of an aircraft engine, to signal an anticipated use power, thereby allowing the generator to idle when power is not needed. An intelligent load 212 may communicate with a circuit breaker 130, thereby alerting the circuit breaker 130 to anticipated power use. The power draw from a device or intelligent load 212 is characterized, enabling intelligent circuit breaking for power drawing activity outside of the expected range for normal power drawing activities. If the power draw is out of the expected range of acceptable power use for that intelligent load 212, the circuit breaker 130 intelligently trips. In an embodiment, the circuit breaker 130 compares profiles of anticipated power use to actual power use by the intelligent load 212. For example, activation of a door lock may have a particular signature profile that can be used as a template to identify proper power draw by the intelligent load 212 associated with the door lock activation. For example, referring to Figures 4a and 4b, a current chart 400 and voltage chart 410 for 28 V solenoids is illustrated. The current chart 400 and voltage chart 410 illustrate that the current draw 402 and voltage drop 404 for solenoids have an identifiable characteristic, a spike that occurs shortly after energizing, that can be used to develop a signature profile.

Continuing to refer to the current chart 400 and voltage chart 410 of Figures 4a and 4b, a current draw 402 and voltage drop 404 are illustrated for a 28 V circuit, powering six 0.4 Amp solenoids as loads 112. The configuration for the current chart 400 and voltage chart 410 of Figures 4a and 4b is similar to the simplified system 100 in that no intelligent loads 212 are utilized. The initial current draw 402 is 0 Amps and the voltage drop 404 is 0 V. The bus 120 is a nominal 28 V circuit. At time 0.5s, one solenoid load 112 is activated, causing 0.4 Amps of current to be drawn. This also causes an approximate 0.75 V drop on the 28 V circuit. Between times 1 s and 3s, other solenoid loads 112 are activated and deactivated. At time 1.5s, multiple solenoids are activated causing up to 1.8 Amps to be drawn, and causing a 3.5 V drop in the 28 V circuit. In the example illustrated in Figures 4a and 4b, the circuit breaker 130, power source 140, and wiring 122, 120 must be capable of handling 1.8 Amps to prevent overheating or a circuit breaker 130 from tripping. Moreover, the solenoid loads 112 or other loads 112, must be capable of operating using the lower 24.5 voltage provided on the 28 V circuit during periods of heavy utilization.

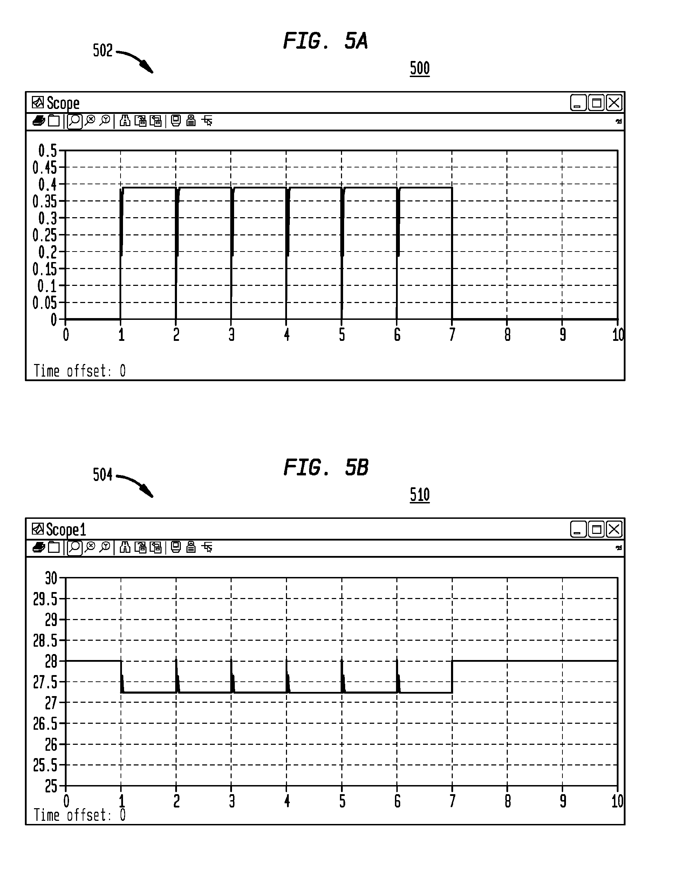

Referring now to the current charge of for intelligent loads 500 and voltage chart for intelligent loads 510 of Figures 5a and 5b, a reduced current draw 502 and reduced voltage drop 504 are illustrated for a 28 V circuit, powering six 0.4 Amp solenoids configured as intelligent loads 212. The initial reduced current draw 502 is 0 Amps and the reduced voltage drop 504 is 0 V. The lower bus 220 is a nominal 28 V circuit. At time 1.0s, one solenoid configured as an intelligent load 212 is activated, causing 0.4 Amps of current to be drawn. This also causes an approximate 0.75 V drop on the 28 V circuit. However, no other solenoids configured as intelligent loads 212 activate until the first solenoid deactivates. It takes somewhat longer for all of the solenoids to activate than in Figures 4a and 4b, however the intelligent loads 212 offer savings that offset the additional time for low duty-cycle loads. One benefit is that the reduced current draw 502 never rises above 0.4 Amps, and the reduced voltage drop 504 is never above about 0.75 Volts, so that the 28 V circuit never drops below about 27.25 Volts. This advantageously allows the use of circuit breakers 130, power sources 140, and wiring 122, 120 that only have to be capable of handling 0.4 Amps, and solenoids that work for voltages above 27.25 Volts.

The disclosed system and method provides substantial improvements when used for powering intelligent loads 500 that are used intermittently, for example electronic lock, cargo door motors, and single use maintenance displays. These and other low-usage loads can be installed with a minimum amount of power infrastructure necessary to support them, thereby allowing the electrical system designer to use lower power components, generators and wiring. Low power generators and wiring are generally smaller, have a lower cost, and have a lower weight, resulting in savings in space utilization, lower costs during manufacturing, and lower recurring fuel costs for the customer because of the decreased weight of the aircraft. Therefore the disclosed system and method advantageously permits the design and implementation of economical power systems and power infrastructures that are smaller and lighter than systems designed using conventional approaches.

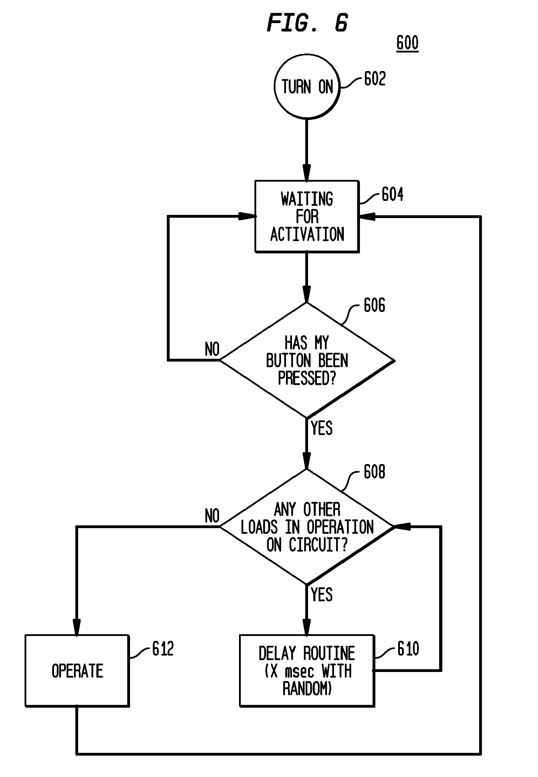

Referring now to Figure 6, an exemplary flowchart of the method of operation 600 for an intelligent load 212 is presented. In a first step, power is turned on 602 to the low power bus 220. The intelligent load 212 enters a state of waiting for activation 604, for example a user activating the intelligent load 212, such as a user opening a cargo door. Once the intelligent load 212 is activated 606, for example by a signal or button press, the intelligent load 212 monitors the low power bus 220 for other intelligent loads 212 that might be actively drawing current from the low power bus 220. If another load is actively drawing current, then the intelligent load 212 delays 610 activating and then monitors 608 the low power bus 220 again. If no other load 212 is drawing current, the intelligent load 212 activates or operates 612 after which the intelligent load 212 returns to the operation of waiting for activation 604.

Additional embodiments that are disclosed are set out below.

An apparatus, comprising: a switch for intermittently drawing power from a power bus; a load in electrical communication with said switch; a sensor for sensing an electrical state of said power bus; and a controller in communications with said switch and said sensing means; and wherein said controller controls said switch to intermittently draw power from said power bus for powering said load, based at least in part on said electrical state of said power bus.

The apparatus may further comprise: a battery in electrical communication with said power bus through said switch; and wherein said battery is charged with a stored power using an intermittent power draw through said switch; and wherein said load is in electrical communication with said battery; and wherein said battery provides said stored power to said load when said switch is not drawing power from said power bus.

Optionally, said controller prevents said switch from drawing power from said power bus based upon a condition selected from the group consisting of a voltage drop on said power bus due to a second load drawing power from said power bus; a current increase on said power bus due to said second load drawing power from said power bus; and a received signal indicating said power bus is in use.

The embodiments of the invention shown in the drawings and described above are exemplary of numerous embodiments that may be made within the scope of the appended claims. It is contemplated that numerous other configurations of the load coordinating system 100 may be created taking advantage of the disclosed approach. It is the applicant's intention that the scope of the patent issuing herefrom will be limited only by the scope of the appended claims.

## Claims

1. A system, comprising:
a power bus;
a first electrically powered device adapted to intermittently draw power from said power bus;
a second electrically powered device adapted to intermittently draw power from said power bus; and,
a means for sensing that said second electronically powered device is drawing power from said power bus, and
wherein said first electrically powered device is inhibited from drawing power from said power bus when said second electronically powered device is drawing power from said power bus.

2. The system of claim 1, wherein said power bus comprises a wire that connects said first electrically powered device and said second electrically powered device to a circuit breaker, said wire having a limited current carrying capacity that is less than the sum of a current draw of said first electrically powered device and said second electrically powered device.

3. The system of claim 1, wherein said means for sensing is selected from the group consisting of a voltage sensor, an amperage sensor, a magnetic field sensor, a coil for sensing a current in said power bus, a Hall effect device, a solid-state sensor, an electrical sensor, a magnetic sensor, and an electromagnetic sensor.

4. The system of claim 1, further comprising an energy storage means for providing energy to said first electrically powered device for a full activation of said first electrically powered device.

5. The system of claim 4, wherein said energy storage means is selected from the group consisting of a battery, rechargeable battery, a NiCad battery, a Li-Ion battery, a lithium polymer battery, and a capacitor.

6. The system of claim 1, wherein said first electrically powered device coordinates an intermittent power draw from said power bus with said second electrically powered device.

7. The system of claim 6, further comprising a means for prioritizing an intermittent power draw from said power bus of said first electrically powered device in relation to an intermittent power draw of said second electrically powered device.

8. The system of claim 6, further comprising a communications means for communicating an intermittent power draw by said first electrically powered device to said second electrically powered device, and wherein said communications means is selected from the group consisting of a data line, a serial data communications module, a wireless data communication module, and a power bus communications module.

9. A method, comprising the operations of:
connecting a plurality of intelligent loads to an electrical circuit;
energizing said electrical circuit; and
coordinating a plurality of intermittent power draws, from said electrical circuit, by said plurality of intelligent loads to prevent a circuit breaker from disconnecting said electrical circuit from a power source.

10. The method of claim 9, further comprising the operation of:
inhibiting an intermittent power draw from a first intelligent load during an intermittent power draw of a second intelligent load.

11. The method of claim 10, further comprising the operations of:
sensing said intermittent power draw of said second intelligent load; and
inhibiting an intermittent power draw by said first intelligent load during said operation of sensing said intermittent power draw of said second intelligent load.

12. The method of claim 11, wherein said operation of sensing is performed by a sensor selected from the group consisting of a voltage sensor, an amperage sensor, a magnetic field sensor, a coil for sensing a current, a Hall effect device, a solid-state sensor, an electrical sensor, a magnetic sensor, and an electromagnetic sensor.

13. The method of claim 9, wherein said operation of coordinating further comprises:
communicating an intermittent power draw by said first intelligent load to inhibit an intermittent power draw by said second intelligent load using a communications medium selected from the group consisting of a data line, a serial data communications module, a wireless data communication module, and a power bus communications module.

14. The method of claim 9, further comprising the operation of:
prioritizing a plurality of intermittent power draws, from said electrical circuit, of said plurality of intelligent loads.

15. The method of claim 9, further comprising the operations of:
powering an activation of a first intelligent load from energy stored in an energy storage means; and,
charging said energy storage means using an intermittent power draw.

16. The method of claim 15, wherein said energy storage means is selected from the group consisting of a battery, rechargeable battery, a NiCad battery, a Li-Ion battery, a lithium polymer battery, and a capacitor.

17. The method of claim 9, wherein said electrical circuit is a limited current carrying electrical circuit such that simultaneous activation of more than one intelligent load triggers said circuit breaker to disconnect said electrical circuit from a power source.
